Europäisches Patentamt

(19) European Patent Office

Office européen des brevets

(11) Publication number: **0 053 420**

**B1**

(12) **EUROPEAN PATENT SPECIFICATION**

(45) Date of publication of patent specification: **06.03.85**

(21) Application number: **81201292.0**

(22) Date of filing: **23.11.81**

(51) Int. Cl.⁴: **B 23 K 1/19, B 23 K 1/18, B 23 K 1/04, F 16 L 13/08, F 16 L 27/04**

(54) **Method of attaching the sealing member of a threaded coupling to one end of high-pressure pipe.**

(30) Priority: **01.12.80 NL 8006535**

(43) Date of publication of application:
**09.06.82 Bulletin 82/23**

(45) Publication of the grant of the patent:
**06.03.85 Bulletin 85/10**

(84) Designated Contracting States:
**CH DE FR GB IT LI NL SE**

(56) References cited:
**DE-A-1 650 121**
**GB-A- 888 055**
**GB-A-2 045 376**
**US-A-3 198 556**
**US-A-3 201 154**

**STAHLSCHLÜSSEL, 7th edition 1965, Verlag Stahlschlüssel Wegst KG, MARBACH/NECKAR (DE), pages 75,76 and 138**
**WERKSTATTSTECHNIK, vol. 58, no. 11, 1968, W. MEZGER: "Praktische Erfahrungen mit dem Hartlöten unter Schutzgas", pages 538-540**

(73) Proprietor: **SKF Industrial Trading & Development Company B.V.**
**Kelvinbaan 16 P.O. Box 50**
**NL-3430 AB Nieuwegein (NL)**

(72) Inventor: **van de Kooi, Johannes Maria**
**Lodewijkstraat 29**
**Montfoort (NL)**

(74) Representative: **Merkelbach, B.**
**SKF Engineering & Research Centre B.V.**
**Kelvinbaan 16 P.O. Box 50**
**NL-3430 AB Nieuwegein (NL)**

Courier Press, Leamington Spa, England.

## Description

The invention relates to a method of attaching the sealing member of a threaded coupling to one end of a high-pressure pipe, the end of the pipe being passed through a hole in the sealing member and fixed therein, which threaded coupling further comprises a hollow nut loosely placed over the pipe abutting the sealing member, its interior engaging the sealing member, to be screwed onto or into a matching part, the sealing member is made from a steel hardenable at a certain temperature, and brazing material is applied around the pipe whereby a brazed connection can be obtained at that temperature, whereafter the end of the pipe and the sealing member around it are heated to the said certain temperature so that the brazing material will flow between the exterior of the pipe end and the hole in the sealing member. Such a method is e.g. described in U.S. Patent 3.201.154.

In use of a threaded coupling having a sealing member fixed on the pipe by the known method for handling a liquid under high pressure, for example to assemble a stuffing box around a bearing, leakage will often occur along the sleeve or sealing member as a result of damage of the connection between said sleeve or sealing member and pipe when the hollow nut is tightened.

The object of the invention is to provide an improved method of attaching the sealing member of a threaded coupling to one end of a pipe, the said sealing member being so fixed to the pipe end that also under high pressure no leakage can occur when a threaded coupling is applied.

This object is accomplished, according to the invention, in that the sealing member is made of M2 steel and the brazing material used is copper, said brazing takes place at a temperature of 1110—1120°C, and the subsequent cooling is such as to harden the sealing member. In this way a hard steel sealing member with a hardness of at least 58 HRc is obtainable, while the brazed connection may have a tensile strength greater than that of the pipe.

Preferably the connecting and the hardening of said pipe end together with the sealing member are carried out under a protective atmosphere, for example an atmosphere of cracked ammonia, whereby the sealing member acquires a bright surface so that it need not be further polished.

Another object of the invention is to provide an improved pipe coupling at the end of a pipe, comprising a sealing member having a hole in which an end portion of the pipe is fixed and a hollow nut is loosely placed over said end portion abutting the sealing member. The improvement consists therein that the sealing member is a ball-like element connected to said end pipe portion by a brazed connection, the brazing medium consisting of copper, whilst the said sealing member consists of M2 steel hardenable at the temperature required to produce the said brazed connection.

The invention will be described in more detail with reference to the drawings, in which

Fig. 1 shows a pipe end with a sealing member slipped over it prior to heating, and

Fig. 2 shows the pipe end with sealing member after heating and cooling.

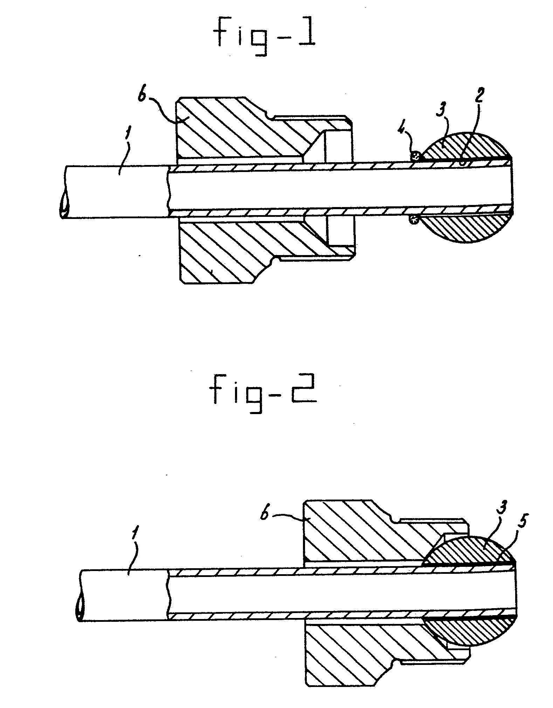

As shown in Fig. 1, a pipe end 1 is inserted in the hole 2 through the sealing member 3, of spherical shape. Around the pipe end 1, near the sealing member 3, brazing material 4 has been applied. The sealing member 3 consists of M2 steel, and the brazing material of copper.

Then the assembly shown in Fig. 1 is heated for example to a temperature of 1110—1120°C, whereby the brazing material 4 is made to flow into the space between the interior of the hole 2 and the exterior of the pipe end 1, so that after cooling, the brazed connection 5 shown in Fig. 2 is obtained. By the heating and subsequent cooling, the steel of which the sealing member 3 consists is hardened.

The heating is preferably carried out in a furnace having a continuous conveyer of wire mesh, in which furnace a protective atmosphere consisting for example of cracked ammonia is present.

Reference numeral 6 designates the hollow nut forming the threaded coupling together with the sealing member 3.

## Claims

1. Method of attaching the sealing member (3) of a threaded coupling to one end of a high-pressure pipe (1) the end of the pipe being passed through a hole (2) in the sealing member and fixed therein, which threaded coupling further comprises a hollow nut (6) loosely placed over the pipe abutting the sealing member, its interior engaging the sealing member to be screwed onto or into a matching part, the sealing member being made from a steel hardenable at a certain temperature, and wherein brazing material (4) is applied around the pipe whereby a brazed connection (5) can be obtained at that temperature, whereafter the end of the pipe and the sealing member around it are heated to the said certain temperature so that the brazing material will flow between the exterior of the pipe end and the hole in the sealing member, characterized in that the sealing member (3) is made of M2 steel and the brazing material (4) used is copper, said brazing takes place at a temperature of 1110—1120°C, and the subsequent cooling is such as to harden the sealing member (3).

2. Method according to claim 1 characterized in that the connecting and the hardening of said pipe end (1) together with the sealing member (3) are carried out under a protective atmosphere.

3. Pipe coupling at the end of a pipe (1), comprising a sealing member (3) having a hole (2) in which an end portion of the pipe is fixed, and a hollow nut is loosely placed over said end portion abutting the sealing member, characterized in that the sealing member (3) is a ball-like element connected to said end pipe portion (1) by a brazed connection (5), the brazing medium (4) consisting of copper, whilst the said sealing member (3) consists of M2 steel hardenable at the temperature required to produce the said brazed connection (5).

## Revendications

1. Procédé de fixation de l'organe d'étanchéité (3) d'un raccord vissé à une extrémité d'un tuyau à haute pression (1), l'extrémité du tuyau étant passée à travers un trou (2) dans l'organe d'étanchéité et fixée à l'intérieur, lequel raccord vissé comporte en plus un écrou creux (6) placé avec du jeu sur le tuyau et s'appuyant sur l'organe d'étanchéité, son intérieur étant en prise avec l'organe d'étanchéité à visser sur ou dans une partie appariée, l'organe d'étanchéité étant en acier trempable à une certaine température, et dans lequel du matériau de brasure (4) est appliqué autour du tuyau permettant de réaliser un raccord brasé (5) à cette température, après quoi l'extrémité du tuyau et l'organe d'étanchéité qui l'entoure sont chauffés à la température en question, de sorte que le matériau de brasure coule entre l'extérieur de l'extrémité du tuyau et le tou dans l'organe d'étanchéité, caractérisé en ce que l'organe d'étanchéité (3) est fait d'acier M2 et le matériau de basure (4) utilisé est du cuivre, ledit brasage ayant lieu à une température de 1110°C—1120°C, et le refroidissement ultérieur est tel qu'il trempe l'organe d'étanchéité (3).

2. Procédé selon la revendication 1, caractérisé en ce que l'assemblage et la trempe de ladite extrémité du tuyau (1) avec l'organe d'étanchéité (3) sont réalisés sous une atmosphères protectrice.

3. Raccord de tuyau à l'extrémité d'un tuyau (1), comportant un organe d'étanchéité (3), qui possède un trou (2) dans lequel une portion terminale du tuyau est fixée, et un écrou creux est placé avec du jeu sur ladite portion terminale en s'appuyant sur l'organe d'étanchéité, caractérisé en ce que l'organe d'étanchéité (3) est un élément sphérique assemblé à ladite portion terminale de tuyau (1) par un raccord brasé (5), le produit de brasage (4) étant constitué de cuivre, tandis que ledit organe d'étanchéité (3) est constitué d'acier M2 trempable à la température requise pour réaliser ledit raccord brasé.

## Patentansprüche

1. Verfahren zum Befestigen des Dichtungsgliedes (3) einer Schraubverbindung an einem Ende eines Hochdruckrohres (1), dessen Ende durch ein Loch (2) in dem Dichtungsglied hindurchgeführt und darin befestigt ist, welche Schraubverbindung ferner eine hohle Mutter (6) aufweist, die lose auf dem am Dichtungsglied anliegenden Rohr angeordnet ist, mit ihrer Innenseite am Dichtungsglied angreift und auf oder in ein passendes Teil schraubbar ist, wobei das Dichtungsglied aus einem bei einer bestimmten Temperatur härtbaren Stahl besteht und Lötmaterial (4) rings um das Rohr aufgebracht wird, wodurch ein Lötverbindung (5) bei dieser Temperatur erhalten werden kann, wonach das Ende des Rohrs und das dieses umschließende Dichtungsglied auf die genannte bestimmte Temperatur erwärmt werden, so daß das Lötmaterial zwischen die Außenseite des Rohrendes und das Loch im Dichtungsglied fließt, dadurch gekennzeichnet, daß das Dichtungsglied (3) aus M2-Stahl besteht und als Lötmaterial (4) Kupfer verwendet wird, das Löten bei einer Temperatur von 1.110—1.120°C stattfindet, und die nachfolgende Abkühlung so durchgeführt wird, daß das Dichtungs, glied (3) gehärtet wird.

2. Verfahren nach Anspruch 1, dadurch gekennzeichnet, daß das Verbinden und Härten des Rohrendes (1) zusammen mit dem Dichtungsglied (3) unter einer Schutzatmosphäre durchgeführt werden.

3. Rohrkupplung am Ende eines Rohrs (1), bestehend aus einem Dichtungsglied (3) mit einem Loch (2), in welchem ein Endabschnitt des Rohrs befestigt ist, und einer hohlen Mutter, welche lose auf dem genannten, gegen das Dichtungsglied anliegenden Endabschnitt angeordnet ist, dadurch gekennzeichnet, daß das Dichtungsglied (3) ein kugelartiges Element ist, welches mit dem genannten Rohrendabschnitt (1) durch eine Lötverbindung (5) verbunden ist, wobei das Lötmittel (4) aus Kupfer besteht, während das Dichtungsglied (3) aus M2-Stahl bestaht, der bei der zum Erzeugen der Lötverbindung erforderlichen Temperatur härtbar ist.

## Fig-1

## Fig-2